# EUROPÄISCHE PATENTSCHRIFT

(11) **EP 0 675 982 B1**
(45) Veröffentlichungstag und Bekanntmachung des Hinweises auf die Patenterteilung: **19.06.1996**
(21) Anmeldenummer: 94902527.4
(22) Anmeldetag: 23.12.1993
(51) Int. Cl.: D21C 11/00, C02F 9/00, C02F 1/52

(54) **VERFAHREN ZUR ENTSORGUNG DES ÜBERSCHUSSSCHLAMMES**
METHOD OF DISPOSING OF EXCESS SLUDGE
PROCEDE PERMETTANT D'ELIMINER DES BOUES RESIDUELLES

(30) Priorität: 24.12.1992 AT 2573/92
(43) Veröffentlichungstag der Anmeldung: 11.10.1995
(73) Patentinhaber: AUSTRIAN ENERGY & ENVIRONMENT SGP/WAAGNER-BIRO GmbH, A-1210 Wien (AT)
(72) Erfinder: LOQUENZ, Heinz, A-8043 Graz (AT); GLASER, Wolfgang, A-8052 Graz (AT); TAMANDL, Kurt, A-8020 Graz (AZ); YALDEZ, Peter, A-8042 Graz (AT)
(74) Vertreter: Wallner, Gerhard, Dipl.-Ing.
(86) Internationale Anmeldenummer: AT9300198
(87) Internationale Veröffentlichungsnummer: WO9415019

(56) Entgegenhaltungen:
- US-A- 3 377 271
- US-A- 3 561 922
- US-A- 3 740 363
- DATABASE WPI Week 7647, Derwent Publications Ltd., London, GB; AN 76-87462X & JP,A,51 109 305 (SANYO-KOKUSAKU PULP) 29. September 1976

## Beschreibung

Die Erfindung betrifft ein Verfahren zur Entsorgung des bei der Abwasserreinigung entstehenden Überschußschlammes biologischer Abwasserreinigungsanlagen von Papier oder Zellstoffanlagen mit Abwasserneutralisation, die beispielsweise nach einem Aufschlußverfahren mit MgO arbeiten, wobei das Abwasser vor dem Eintritt in die Belebtschlammanlage (83) mit einer Base neutralisiert wird und der entstehende Überschußschlamm entweder direkt oder mit einem anderen flüssigen Brennstoff vermischt und anschließend in einem Kessel verbrannt wird.

Aus der EP A1 0171093 ist es bekannt zur Herabsetzung der Klebeerscheinungen des Brennkammerstaubes der zu verbrennenden Ablauge Erdalkalioxide oder Hydroxide und/oder Karbonate zuzumischen. Dieses Problem löst aber nicht Überschußschlammprobleme biologischer Kläranlagen für saure Abwässer, insbesondere mit enthaltenden Brüdenkondensaten.

Die US-A-3,740 363 offenbart ein biologisches Abwasserbehandlungsverfahren zur Entfärbung des Abwassers mit Salzen, in welchem der Schlamm aus dem Absetzbecken und der biologischen Verfahrensstufen gemeinsam filtriert, entwässert und verascht wird. Die Asche wird nach Abscheidung eines Wertstoffes mit dem Filtrat und dem frischen Abwasser durchmischt. Dieses Verfahren wird durch unsere Erfindung modifiziert, indem der Schlamm in der Ablaugeverbrennung der Chemikalienrückgewinnungsanlage verbrannt wird und zuvor das Abwasser mit dem Chemikal des Zellstoffaufschlusses neutralisiert wird, welches nach der Verbrennung im Flugstaub enthalten ist und teilweise zur Kochsäuregewinnung und teilweise zur Neutralisation des Abwassers wieder verwendet wird, wodurch ein Chemikalienkreislauf gebildet wird.

Aus der JP-A-51-109 305 ist es bekannt, die Chemikalien, wie z. B. MgO bzw. CaO für den Zellstoffaufschluß aus der Abgasreinigungsanlage nach der Verbrennung der verbrauchten Chemikalien rückzugewinnen, in dem die Verbrennungsasche in Wasser suspendiert wird und mit der Suspension das Abgas zur SO₂ Absorption gewaschen wird.

Der bei der biologischen Reinigung des Abwassers anfallende Überschußschlamm wird entweder deponiert oder in einer eigenen Anlage verbrannt. In beiden Fällen wird das Abwasser neutralisiert, wobei das zumeist saure Abwasser zwecks Neutralisation vor seiner biologischen Reinigung mit Kalkmilch versetzt wird. Dabei wird ein wesentlicher Teil des Neutralisationsmittels (Kalk) in die entstehende Biomasse eingebunden und fällt bei der Verbrennung des Überschußschlammes als zu entsorgende Flugasche an und ist damit umweltbelastend. Der untere Heizwert des vorentwässerten Schlammes ist wegen des relativ hohen Wassergehaltes gering, sodaß im allgemeinen Zusatzbrennstoffe notwendig sind. Die Verbrennungseinrichtungen sind wegen ihrer besonderen Konstruktion und den zusätzlich erforderlichen komplizierten Abgaserzeugungs-einrichtungen entsprechend teuer, aber auch die Schlammdeponie stellt sowohl hinsichtlich der entstehenden Umweltbelastung als auch hinsichtlich der entstehenden Kosten keine befriedigende Lösung dar, wobei in den meisten Fällen das benötigte Deponievolumen sehr beschränkt ist.

Die Erfindung hat es sich zur Aufgabe gestellt, den bestehenden Schwierigkeiten zu begegnen und die Schlammverwertung in die Chemikalienrückgewinnung einzubinden.

Die Erfindung ist dadurch gekennzeichnet, daß der Schlamm gemeinsam mit der Lauge in einem Laugenverbrennungskessel verbrannt wird, der im Verbrennungsabgas mitgeführte Staub abgeschieden und das im Staub enthaltene Neutralisationsmittel zumindest teilweise zur Neutralisation des Abwassers und für den Zellstoffaufschluß herangezogen wird. Insbesondere wird das im Abgas enthaltene SO₂ durch Alkali- oder Erdalkalizugaben absorbiert. Vorzugsweise wird das zu verbrennende Schlammgemisch vor der Verbrennung, insbesondere auf 50-70% ATS, eingedickt. Gemäß einer weiteren Ausgestaltung der Erfindung wird die Dünnlauge vor der Einmischung des Überschußschlammes auf einen pH-Wert größer als 9, insbesondere 10, eingestellt und wird der vom Verbrennungsabgas mitgeführte Staub zur MgO-Rückgewinnung und Befreiung von unerwünschten Begleitstoffen vor seiner Verwendung ausgelaugt oder ausgesiebt.

Die Erfindung wird anhand eines Verfahrensschemas beispielsweise für eine Zellstoffabrik erklärt.

In einer Fabrik für die Zellstofferzeugung 10 nach dem Mg Aufschlußverfahren wird in einer Kocherei 1 der Zellstoff durch Herauslösen von Lignin bzw. Hemizellulosen aus dem Holz mittels Magnesiumbisulfit Kocnsäure gewonnen. Die gelöste Substanz wird in der Erfassung 2 weitestgehend getrennt. Der entstehende Rohzellstoff wird in der Bleicherei 3 in mehreren Stufen auf die gewünschte Endbleiche gebleicht. Zwischen den einzelnen Bleichstufen wird der Zellstoff im Gegenstrom gewaschen wobei Frischwasser eingesetzt wird. Das Waschwasser kann bei Einsatz einer Magnesium- Sauerstoff-Peroxydstufe zumindest teilweise in der Erfassung 2 weiterverwendet werden. Ein großer Teil des Bleichereiabwassers bzw. andere belastete Fabriksabwässer wird der biologischen Reinigungsanlage 80 zugeführt und dort gereinigt. Nach einer mechanischen Vorreinigung 81 wird das zumeist saure Abwasser mittels basischer Magnesiumverbindungen (MgO bzw. Mg(OH)₂ ) in einer Neutralisationsanlage 82 behandelt und anschließend der Belebung 83 zugeführt, wo die organischen Inhaltstoffe weitgehend abgebaut werden. Das Abwasser wird dann einem Absetzbecken 84 zugeführt, von dem ein Teil des Schlammes in die Belebung 83 rezirkuliert wird. Der hiebei entstehende Überschußschlamm wird beispielsweise mittels einer Filterpresse 85 auf etwa 10% Trockengehalt mechanisch entwässert, in weiterer Folge wird er in hochneutralisierter Dünnlauge in Stufe 9 vorsuspendiert und anschließend der Dünnlaugenneutralisation 4 zugeführt. Die Dünnlauge welche nun Schlamm in suspendierter Form enthält, wird in der zumeist 4 bis 6 stufigen Eindampfanlage 5 auf möglichst hohen (ca 50 - 75%) Trockensubstanzgehalt (ATS) eingedampft, welche schließlich im Ablaugeverbrennungskessel 61 einer Chemikalienrückgewinnungsanlage 60 etwa gemäß AT PS 347236 verbrannt wird. Im Abscheider 62 wird zunächst die Flugasche welche überwiegend aus Magnesiumoxid besteht und in der SO2-Absorption 63 das Schwefeldioxid in einer oder mehreren Stufen aus dem Rauchgas abgeschieden. In der Säureerzeugung durch SO2 Absorption 63 erfolgt gleichzeitig die Umsetzung von Magnesiumoxid und Schwefeldioxid zu Magnesiumbisulfitlösung, welche nach einer Reinigung 7 bzw. Aufstärkung wieder als Kochsäure zum Aufschluß des Holzes in die Kocherei 1 zurückgeführt wird.

Durch die Verwendung von teuren Magnesiumverbindungen anstelle von billigen Kalziumverbindungen zur Abwasserneutralisation fällt nach der Verbrennung das Neutralisationsmittel mit der Flugasche in unmittelbar wiederverwendbarer Form an, wird im Abscheider 62 abgeschieden und neuerlich zur Abwasserneutralisation eingesetzt. Dadurch wird die biologische Kläranlage in den bisher bestehenden Chemikalienkreislauf eingebunden. Es wird zunächst das Abwasser aus der Bleicherei 3 mit einer basischen Magnesiumverbindung, vorzugsweise Magnesiumoxid oder Magnesiumhydroxid aus dem Staubabscheider 62 der bestehenden Chemikalienrückgewinnungsanlage 60 stammend über die Leitung 6 neutralisiert. Gleichzeitig wird der mechanisch entwässerte Überschußschlamm der biologischen Kläranlage in Dünnlauge deren pH Wert durch Zugabe einer Base auf größer gleich 10 angehoben wird, vorsuspendiert, wobei infolge des erhöhten pH Wertes die Zellwände der Biomasse zum Teil aufgelöst werden, was in der Folge das Absetzen des suspendierten Schlammes in der Dünnlauge verzögert. Der vorsuspendierte Schlamm wird sodann der neutralisierten Dünnlauge vor der Eindampfung zugesetzt und gemeinsam mit der Lauge auf 50 bis 70% ATS eingedampft. Die erzeugte schlammhaltige Dicklauge wird nun im bestehenden Laugenkessel 61 verbrannt und das für die Abwasserneutralisation verwendete Neutralisationschemikal als Magnesiumoxid aus dem Abgas des Laugenverbrennungskessels 61 abgeschieden. Unter besonderen Voraussetzungen kann der Überschußschlamm auch mit einem ATS bis 10% direkt in die neutralisierte Dünnlauge eingemischt werden.

Das bestehende Verfahren weist gegenüber den bekannten Verfahren die nachstehenden Vorteile auf:

In Zellstoffabriken, welche Zellstoff nach einem Magnesiumverfahren erzeugen kann der Überschußschlamm im wesentlichen unter Benützung bestehender Einrichtungen thermisch entsorgt werden (Neutralisationseinrichtung, Eindampfanlage, Ablaugenverbrennungskessel und Abscheideeirichtungen). Die thermische Nutzung des Schlammes erfolgt weitaus wirtschaftlicher, da das im Schlamm enthaltene Restwasser bereits vor der Verbrennung zum größten Teil in der Eindampfanlage mit hohem Wirkungsgrad ausgedampft wird, wodurch der untere Heizwert des Schlammes vor der Verbrennung wesentlich verbessert wird. Schließlich werden die im Überschußschlamm enthaltenen Neutralisationschemikalien im wiederverwendbaren Zustand zurückgewonnen.

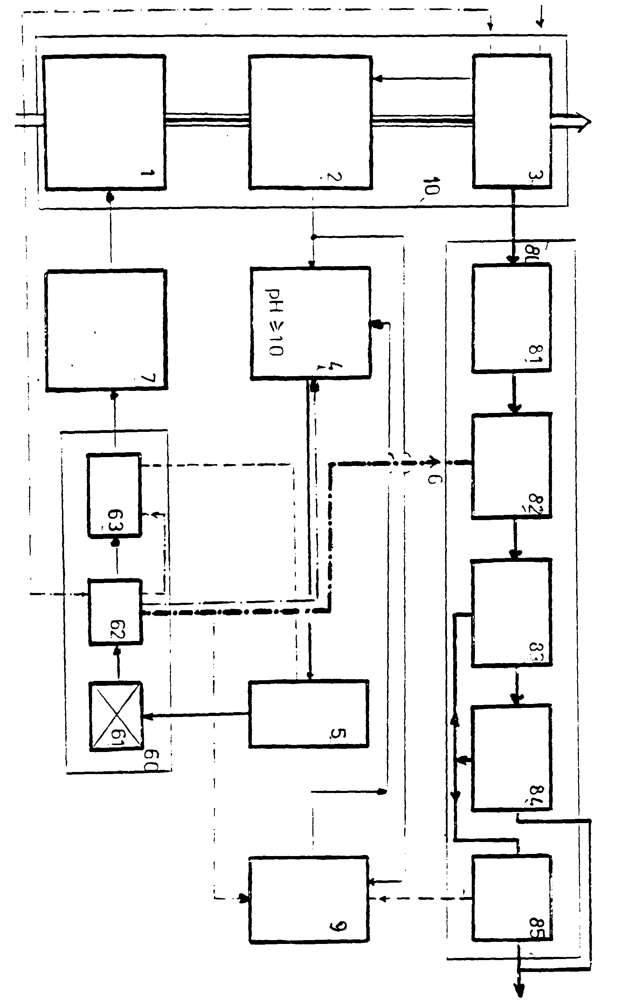

## Patentansprüche

1. Verfahren zur Entsorgung des bei der Abwasserreinigung entstehenden Überschußschlammes biologischer Abwasserreinigungsanlagen (80) von Papier- oder Zellstoffanlagen mit Abwasserneutralisation, die beispielsweise nach einem Aufschlußverfahren mit MgO arbeiten, wobei das Abwasser vor dem Eintritt in die Belebtschlammanlage (83) mit einer Base neutralisiert wird und der entstehende Überschußschlamm entweder direkt oder mit einem anderen flüssigen Brennstoff vermischt und anschließend in einem Kessel verbrannt wird, dadurch gekennzeichnet, daß der Schlamm gemeinsam mit der Lauge in einem Laugenverbrennungskessel (61) verbrannt wird, der im Verbrennungsabgas mitgeführte Staub (62) abgeschieden und das im Staub enthaltene Neutralisationsmittel zumindest teilweise zur Neutralisation des Abwassers (82) und für den Zellstoffaufschluß (1) herangezogen wird.

2. Verfahren nach Anspruch 1, dadurch gekennzeichnet, daß das im Abgas enthaltene SO₂ zur Chemikalienrückgewinnung durch Alkali- oder Erdalkalizugaben (63) absorbiert wird.

3. Verfahren nach Anspruch 1, dadurch gekennzeichnet, daß das zu verbrennende Schlammgemisch vor der Verbrennung (61), insbesondere auf 50 - 70 % ATS, eingedickt wird.

4. Verfahren nach Anspruch 1, dadurch gekennzeichnet, daß die Dünnlauge (4) vor der Einmischung des Überschußschlammes (9) auf einen pH-Wert größer als 9, insbesondere 10, eingestellt wird.

5. Verfahren nach Anspruch 1, dadurch gekennzeichnet, daß der vom Verbrennungsabgas mitgeführte Staub (62) zur MgO-Rückgewinnung und Befreiung von unerwünschten Begleitstoffen vor seiner Verwendung (1) ausgelaugt oder ausgesiebt (7) wird.

## Claims

1. Procedure for disposing of excess sludge resulting from waste water cleaning in biological waste-water treatment plants (80) of paper or pulp mills provided with waste water neutralization, utilizing, for example, a digestion procedure with MgO, where the waste water is neutralized with a base prior to entering into the activated sludge plant (83) and the resulting excess sludge is either directly mixed or with another liquid fuel for consecutive burning in a boiler, being characterized by the fact that the sludge is jointly burned with the liquor in a liquor recovery boiler (61), separating the dust (62) entrained with the combustion waste gas and using the neutralization agent contained in the dust at least partially for neutralizing the waste water (82) and for pulp digestion (1).

2. Procedure according to Claim 1, characterized by the fact that the SO₂ contained in the waste gas is absorbed by additions of alkaline or alkaline earths (63) for chemical recovery.

3. Procedure according to Claim 1, characterized by the fact that the mixture of sludge to be burned is thickened, particularly to 50 - 70 % ADS, prior to combustion (61).

4. Procedure according to Claim 1, characterized by the fact that the weak liquor (4) will be adjusted to a pH-value in excess of 9, especially 10, prior to admixing the excess sludge (9).

5. Procedure according to Claim 1, characterized by the fact that the dust (62) entrained with the combustion waste gas will be elutriated or screened out (7) before being utilized (1) for MgO-recovery and liberation of undesired attendant material.

## Revendications

1. Procédé pour l'élimination des boues résiduelles se produisant dans l'épuration des eaux usées dans des installations d'épuration des eaux usées biologiques (80) d'installations de fabrication du papier ou de pâte chimique avec neutralisation des eaux usées, qui fonctionnent par exemple selon un procédé de désintégration avec MgO où les eaux usées, avant l'entrée dans l'installation des boues activées (83), sont neutralisées avec une base et les boues résiduelles qui en résultent sont brûlées finalement dans une chaudière soit directement ou bien mélangées à un autre combustible liquide, caractérisé en ce que les boues sont brûlées avec la lessive dans une chaudière de combustion de la lessive (61) la poussière (62) entraînée dans les gaz d'échappement de la combustion est séparée et l'agent de neutralisation retenu dans la poussière est utilisé au moins partiellement pour la neutralisation des eaux usées (82) et pour la désintégration de la pâte chimique (1).

2. Procédé selon la revendication 1, caractérisé en ce que le SO₂ contenu dans les gaz d'échappement est absorbé, pour la récupération des produits chimiques, par addition d'alcalis et d'alcalino-terreux (63).

3. Procédé selon la revendication 1, caractérisé en ce que le mélange de boues à brûler est épaissi, avant la combustion (61), en particulier à 50-70% ATS.

4. Procédé selon la revendication 1, caractérisé en ce que la lessive d'échappement (4) est ajustée, avant d'y mélanger les boues résiduelles (9), à une valeur de pH plus importante que 9, en particulier 10.

5. Procédé selon la revendication 1, caractérisé en ce que la poussière (62) entraînée par les gaz d'échappement de la combustion, est lavée ou tamisée (7) pour la récupération de MgO et la libération des matières accompagnatrices non souhaitées avant son utilisation (1).
